# EUROPEAN PATENT APPLICATION

(11) **EP 3 223 211 A1**
(43) Date of publication of application: **27.09.2017**
(21) Application number: 16161797.2
(22) Date of filing: 22.03.2016
(51) Int. Cl.: G06Q 10/08

(54) **DEVICE, ARRANGEMENT AND METHOD OF MANAGING PRODUCTS, IN PARTICULAR DRUGSTORE PRODUCTS SUCH AS HYGIENE PRODUCTS**

(71) Applicant: kanban retail b.v., 6411 BM Heerlen (NL)
(72) Inventor:
(74) Representative: Dilg, Haeusler, Schindelmann Patentanwaltsgesellschaft mbH

(57) **Abstract**

A device (100) for managing products (110), in particular drugstore products, more particularly hygiene products, wherein the device (100) comprises: i) a storage volume (102) for storing at least one used product part (110), and ii) a detector element (107) configured for detecting an event that the at least one used product part (110) is moved into the storage volume (102) by detecting that the at least one used product part (110) is brought at least temporarily in sufficient spatial vicinity to the detector element (107) during the moving. Furthermore, the device (100) comprises a first data communication unit (120) configured for transmitting data based on information concerning the at least one used product part (110) and at least one associated detected event to a second data communication unit (150).

## Description

The invention relates to a device, in particular a device for managing products, in particular drugstore products such as hygiene products in a hygiene-related setting.

Furthermore, the invention relates to an arrangement.

The invention also relates to a method of managing products, in particular drugstore products such as hygiene products.

Beyond this, the invention relates to a program element.

Furthermore, the invention relates to a computer-readable medium.

Conventionally, hygiene products in a household, for example diapers, have to be stored in order to possess a reservoir of hygiene products, whereby the reservoir has to be refilled on a continuous basis. This is mandatory for the case that hygiene products are needed and/or unexpectedly a high number of these products is needed instantaneously. Consequently, there has to be a permanent control of the reservoir of hygiene products in order to avoid a sudden depletion of the reservoir, which may lead to unpleasant consequences. In any case, the need to permanently keep the overview over a remaining reservoir of hygiene products is cumbersome for a user.

In this respect, it is one possibility to count and keep in mind each hygiene product, which has been used. Alternatively, the hygiene products within the reservoir have to be monitored manually on a continuous basis. Even in the case that this works fine, the provision of unused hygiene products is still a demanding task. It requires time to visit a shop, which shop is generally only open during working hours, when members of the household may also be at their respective workplaces themselves. For example in the case of diapers, these are frequently needed in the evening hours, when most shops are already closed. But even in the case that shops are still open during evening hours, the question concerning which member of the household will do the shopping of unused hygiene products may cause conflicts. In the case that only one adult person resides in the household during evening hours, this task may even be unfulfillable.

Therefore, such a conventional management of hygiene products is very cumbersome and requires a lot of organization and time.

It is an object of the invention to provide an efficient way of managing products, in particular drugstore products such as hygiene products in a hygiene related setting (such as a household, a public environment such as a kindergarten or a restaurant and/or a private environment such as a facility).

In order to achieve the object defined above, a device, an arrangement, a method of managing products, a program element, and a computer-readable medium according to the independent claims are provided.

According to an exemplary embodiment of the invention, a device for managing products, in particular drugstore products, more particularly hygiene products, is provided, wherein the device comprises a storage volume (which may be defined or delimited by a garbage can, a dustbin or the like) for storing at least one used product part (such as a used diaper and/or a diaper packaging). The device comprises further a detector element configured for detecting an event that the at least one used product part is moved into the storage volume by detecting that the at least one used product part is brought at least temporarily in sufficient spatial vicinity to the detector element during the moving. Furthermore, the device comprises a first data communication unit configured for transmitting data based on information concerning the at least one used product part and at least one associated detected event to a second data communication unit.

An exemplary embodiment of the invention is based on the idea that an event may be detected by a detector element, that a used (for instance hygiene) product has been moved into a storage volume of a device. Hereby, the event may only be detected, when the used (for instance hygiene) product has been brought into sufficient spatial vicinity to the detector element. Based on information concerning the at least one used (for instance hygiene) product and at least one associated detected event, a first data communication unit may be configured for transmitting the information to a second data communication unit.

This may provide the advantage that hygiene products may be managed in an efficient way, which saves time and simplifies drastically the daily life. Manual counting of used (for instance hygiene) products or permanent control of the reservoir of (for instance hygiene) products may become dispensable. Further, the management of the (for instance hygiene) products may be done in a self-sufficient manner without requiring resources of human beings.

According to another exemplary embodiment of the invention, an arrangement for managing products in particular drugstore products, more particularly hygiene products, is provided, wherein the arrangement comprises a device as described above and at least one used product part configured for being detected by the detector element of the device, when the at least one used product part is moved in the storage volume.

According to yet another exemplary embodiment of the invention, a method of managing products, in particular drugstore products, more particularly hygiene products, is provided, wherein the method comprises i) detecting an event that at least one used product part is moved in a storage volume, ii) storing information concerning the at least one used product part and at least one associated detected event, and iii) generating data (which can be the information itself, or any other data derived under consideration of the information) based on the information.

According to still another exemplary embodiment of the invention, a program element (for instance a software routine, in source code or in executable code) is provided, which, when being executed by a processor (such as a microprocessor or a CPU), is adapted to control or carry out a method having the above mentioned features.

According to yet another exemplary embodiment of the invention, a computer-readable medium (for instance a CD, a DVD, a USB stick, a floppy disk or a hard disk) is provided, in which a computer program is stored which, when being executed by a processor (such as a microprocessor or a CPU), is adapted to control or carry out a method having the above mentioned features.

Data processing which may be performed according to embodiments of the invention can be realized by a computer program, which is by software, or by using one or more special electronic optimization circuits, that is in hardware, or in hybrid form, that is by means of software components and hardware components.

In the context of the present application, the term "product" may particularly denote an item, which may be acquirable in a shop. Hereby, the term "product parts" denotes all parts that belong to the product. For example, a product may comprise a manufactured article and the packaging of this article. Hereby, the diaper and the packaging of the diaper may be denoted product parts, respectively. In other words, the term "product part" may denote a diaper and the packaging of the diaper. In another example, the term "product parts" may denote toilet tissues and the paper role, onto which the toilet tissues are rolled. Furthermore, the term "at least one product part" may denote at least one article or at least one packaging of the article.

In the context of the present application, the term "drugstore product" may denote an item, which may be acquirable in a drugstore. A drugstore may be a retail store that dispenses prescription medication and sells over-the-counter medications. Drugstores may also sell miscellaneous items such as cosmetics, cleaning supplies, and/or hygiene products (e.g. diapers).

In the context of the present application, the term "hygiene product" may particularly denote an item, which is used for a hygiene purpose. In particular a hygiene product may be a product, which is used in a hygiene setting, and after the hygiene product has been used, the setting will be more hygienic than before the hygiene product has been used. In other words, if a hygiene product would not have been used in a setting, the setting would be less hygienic. For example a diaper may be a hygiene product, which is used in a household with one or more infants. After a diaper has been used, the setting is more hygienic, than in a scenario in which the diaper would not have been used. Other examples of hygiene products may be changing mats, baby wipes, further kinds of bath articles, in particular disposable bath articles, as well as garbage bags.

In the context of the present application, the term "used product" may particularly denote a product which has already been used. A used product may be a product, which may be of a lower value than an unused product. Furthermore, a used product may be a product, which is generally considered to be suitable for being discarded. Hereby the term "used product parts" may denote used parts that belong to the used product. For example the term "used product parts" may denote a used diaper and/or the used packaging of the diaper. In this respect, the packaging may have already been used and is therefore suitable for being discarded, while the diaper is still unused. In another example, the term "used product parts" may denote a used toilet tissue and/or a used paper role, onto which the toilet tissues are rolled. In this respect, some toilet tissues may have already been used and are therefore suitable for being discarded, while the paper roll is still unused, i.e. still comprises toilet tissues rolled onto it. Furthermore, the term "at least one used product part" may denote at least one used article and/or at least one used packaging of the article.

In the context of the present application, the term "used hygiene product" may particularly denote a hygiene product which has already been used. In other words, a used hygiene product is a product which may be a less hygienic product than an unused hygiene product. Furthermore, a used hygiene product may be a product, which is considered to be suitable for being discarded. A used hygiene product may even be a product, for which it is considered as a must to be discarded. A used hygiene product may therefore be a useless product. In the case that the hygiene product may be a diaper, the used diaper is less hygienic than an unused, new diaper. Further, it may be considered as a must to discard a used diaper. The hygiene product may be a disposable product for throwaway after use.

In the context of the present application, the term "managing products" may particularly denote performing tasks related to the organization of products, in particular drugstore products, more particularly hygiene products in a hygiene setting. This may involve for example the replacement of used hygiene products by unused hygiene products. As has already been elucidated above, an unused hygiene product may be considered as a useful product, while a used hygiene product may be considered as a useless product. Therefore, there is a general desire to replace used hygiene products by unused hygiene products. For example, in the case of diapers, used diapers will be discarded. However, the situation that a reservoir of unused diapers is empty may be very unpleasant. Especially because a setting, in which a diaper has been used, may generally be more hygienic then a scenario in which the diaper would not have been used. Thus, there may be a need to replace used hygiene products by unused hygiene products, which may be considered as managing hygiene products.

In the context of the present application, the term "detector element" may particularly denote an element that is capable of or configured for detecting an event. For example, when a garbage can is opened and a garbage bag is moved into the garbage can, an event of discarding takes place. There is a plurality of options of how such a discarding event may be detected and therefore, there is a plurality of options of how the detector element may be configured. In its simplest form, the detector element may be a hinge, which is used to attach a lid to the garbage can. When the lid is opened to enable the discarding of the garbage bag into the garbage can, then the hinge may produce a jarring sound or an electric signal, and thereby detection of the discarding event takes place. In a more pronounced form, the detector element may be an electronic sensor. The detector element may not necessarily be a part of the device. The detector element may also be configured as a mobile device, in particular an NFC-enabled mobile device such as a smartphone. The detector element may be a single and compact device. The detector element may as well consist of two or even a plurality of detector element devices. These detector element devices may interact with each other. Hereby, each detector element device may have the same function or each detector element device may have a different function such that the detector element devices complement each other. For example, one detector element device may be arranged at the described device for managing products and a further detector element device may be arranged along a disposal route of waste products. In this case, the further detector element device may be arranged at an entrance, e.g. a door, of a house or an apartment. In another example, the further detector element device may be arranged at a waste container at the end of the disposal route. In a further example, there may be a first detector element device arranged at the device for managing waste products, a second detector element may be arranged at the door of a house or apartment, and a third detector element device may be arranged at the waste container.

In the context of the present application, the term "data communication unit" may particularly denote a unit, which is configured to communicate data. Hereby, the distance of the data communication is not limited and may range from centimeters to thousands of kilometers. Data communication may be done in a wireless manner, for example via the internet. However, data communication can also be done in a wired manner. An example may be a user of a computer, who uses the computer in order to communicate data via the internet to a supplier and order in this manner products from the supplier, for example hygiene products. The data communication unit may as well be configured as a cloud computing network. In this manner, there may be no buffer storage of data in the data communication unit at the device. Instead, the data may be directly transferred to a remote storage host, i.e. the data will be stored by means of cloud computing.

In the context of the present application, the term "wireless data communication interface" may particularly denote a combination of a physical interface (being configured for exchanging data wirelessly with another communicatively coupled entity, for instance an antenna) with the capability of communicating with another communicatively coupled entity in accordance with a certain wireless communication protocol (such as an NFC protocol or an RFID protocol). Other technologies of wireless transmission, like low energy Bluetooth 4.0 of Wi-Fi may be implemented as well in exemplary embodiments. However, also a permanent physical structure (such as a piece of fabric or any other substrate) carrying machine-readable code such as an optically readable code can be considered as a wireless data communications interface, since it can be read out by a machine such as an optical reader.

In the context of the present application, the term "in sufficient spatial vicinity" may particularly denote that wireless data communication interfaces of entities are configured so that wireless data communication via the wireless data communication interfaces of the entities is triggered by (or is not enabled before) the event of the two entities approaching one and other up to or even below such a small mutual distance that the exchange of data between these two entities becomes possible in terms of a corresponding communication protocol (such as an NFC protocol).

In the following, further exemplary embodiments of the device, the arrangement, the method of managing products, the computer-readable medium and the program element will be described.

In an embodiment, the device comprises a data storage configured for storing the information concerning the at least one used product part and at least one associated detected event. This may provide the advantage that the information is directly stored in the device, and no external storage device is necessary, thereby efforts may be saved.

In an embodiment, the detector element comprises a wireless data communication interface (configured for wirelessly communicating data with a further wireless data communication interface arranged at the at least one used product part, in particular by one of the group consisting of Near Field Communication (NFC) and Radio Frequency Identification (RFID). This may provide the advantage that it is ensured that the at least one used product part is really brought into spatial vicinity to the detector element, and therefore is really moved into the storage volume. Furthermore, NFC and RFID are well established procedures and may be implemented in a fast and reliable manner. A further advantage is the very low cost of NFC and/or RFID tags, which may be attached to garbage bags, diapers, or packaging of diapers in a cost-efficient manner.

In the context of this application, the term "Near field communication" (NFC) may particularly denote a set of standards for electronic devices to establish radio communication with each other by touching them together or bringing them into proximity, usually no more than a few inches. Communication is also possible between an NFC device and an unpowered NFC chip, called a "tag". NFC allows a two-way communication between endpoints, whereas systems according to other embodiments such as contactless smart cards are one-way only.

In the context of this application, the term "sufficient spatial vicinity" is not limited to a certain distance due to the different settings in which the invention may be applied. For example, if the device may be a garbage can in an infant's room, the measures of the device may be very small, and a spatial vicinity of 5 cm may be appropriate. However, in the case that the device may be a garbage container of a major customer, the measures of the device may be very large, and a spatial vicinity of 120 cm may be appropriate. In the latter case, the use of RFID instead of NFC may be appropriate.

In a further embodiment, the sufficient spatial vicinity between the at least one used product part and the detector element corresponds to a mutual distance of less than 120 cm, in particular less than 10 cm, more particularly less than 5 cm. This may provide the advantage that it can be ensured that a data transfer can only be carried out when this is actually intended by the user. Thus, data safety is guaranteed.

These maximum distance values are in accordance with RFID and/or NFC technology. Even more particularly, the initiation of the data exchange needs to be triggered by the user by bringing e.g. the used hygiene product into said distance in a specific embodiment.

In a further embodiment, the device comprises a processor configured for supervising the information or the entire or part of the procedure described above. This may provide the advantage that the information is supervised in an automatic manner without manual control. Furthermore, the processor may be accessible via a user interface and the processed information may be checked by a user. This may improve flexibility.

The result may be presented to the user via a display of the device such as a liquid-crystal display (LCD). A user may therefore check the present status of the device, the products, or interact manually with the device, if desired.

In a further embodiment, the processor is configured for supervising a number and/or a type of the at least one used product part. This may provide the advantage that at any time point, the number of used product parts in the storage volume is known. Furthermore, at any time point, the number and the type of used hygiene products in the storage volume is known.

The processor may comprise a counter, which may be realized by circuitry such as logical gates. Furthermore, the processor may compute different information obtained from different tags in order to distinguish hygiene products of different types. For example, a user may look at a display associated with the processor and may receive the information that 10 diapers, 3 changing mats, and 20 baby wipes are in the storage volume. In the case that the user does not consequently control how many hygiene products have already been moved to the storage volume, checking the status of the processor may omit the need to access the storage volume and count manually.

In a further embodiment, the processor is configured for triggering the first data communication unit for transmitting the information, when a number of used product parts, which are moved in the storage volume, exceeds a predetermined threshold value. This may provide the advantage that an automatic response is triggered, when the number of used hygiene products increases to a critical point.

For example, the predetermined threshold value may be 20 diapers. If a 20th diaper is moved in the storage volume, wherein already 19 diapers have been moved, then the first data communication unit may transmit the information, that 20 diapers have been moved into the storage volume, to a second data communication unit.

In a further embodiment, the processor is configured for triggering the first data communication unit for transmitting the information, when a number of remaining unused product parts associated to a predefined user falls below a predetermined threshold value. This may provide the advantage that an automatic response is triggered, when the number of unused product parts decreases to a critical point.

The user may possess, for example, 100 diapers and 500 baby wipes in her or his reservoir. The processor may compute the number of hygiene products, which have been moved into the storage volume. The processor may further continue computing the number of hygiene products, even in case that the storage volume may have been emptied one or more times. When, for example, the processor may have computed a number of 90 diapers and 450 baby wipes, which have been disposed, then the number of remaining unused hygiene products may have fallen below a threshold value and the processor may trigger the first data communication unit to transmit the information, that e.g. only 10 diapers and 50 baby wipes are left in the reservoir of the user.

In a further embodiment, the detector element comprises a photo sensor. This may provide the advantage that the reliability is increased, because the event that e.g. a used hygiene product is moved into the storage volume is detected, even in case that a transponder tag may be broken.

A photo sensor, or photoelectric sensor, may be a device used to detect the distance, absence, or presence of an object by using a light transmitter, for example infrared light, and a photoelectric receiver. The photo sensor may be realized in an opposed manner with a through beam. The photo sensor may also be realized in a retro-reflective manner, in which transmitter and receiver are localized at the same location and a reflector is used to bounce the beam of light back from the transmitter to the receiver. Further, the photo-sensor may be realized in a proximity-sensing (diffused) arrangement, wherein transmitted radiation may be reflected off an object in order to reach the receiver. Furthermore, the photo sensor may detect the event that a lid of the device has been opened by detecting the sudden presence of light.

The detector element may be configured to emit a beam of light or a plurality of beams of light in order to cover a certain diameter of the storage volume. The beam of light may be emitted in a horizontal manner. The beam of light may also be situated close to the entrance of the storage volume.

In a further embodiment, the detector element comprises a weighting device configured for detecting the weight of the moved product(s). This may provide the advantage that the amount of products in the storage volume is efficiently determined, in particular when the products are garbage bags.

The weighting device may be a balance, which may be a mechanical or an electromechanical balance. The balance may be arranged at the bottom of the storage volume. Further, the balance may cover a majority of the bottom surface of the storage volume. The balance may be electrically connected to the processor. In the case that the products are garbage bags or are arranged in garbage bags, the weighting device may accurately determine the weight placed into the storage volume and therefore the amount of products may be calculated.

In a further embodiment, the at least one used product part comprises a further wireless data communication interface configured for wirelessly communicating data to the detector element, in particular by one of the group consisting of Near Field Communication and Radio Frequency Identification. This may provide the advantage that data between the wireless data communication interface of the detector unit and the further wireless data communication interface of the product parts are exchanged in a fast, reliable and cost-efficient manner.

The further wireless data communication interface may be a transponder such as an NFC tag and/or an RFID tag. Such a transponder may be attached to each hygiene product and/or to a packaging of each hygiene product without costs being worth mentioning.

In a further embodiment, at least one used product part is a waste product, in particular a used diaper and/or a packaging thereof. This may provide the advantage that the arrangement may be used in a very flexible manner.

Especially diapers are a product for which a reliable and continuous support is mandatory. The same holds true for diaper related products, such as changing mats or baby wipes. In the specific case of diapers, it may not be appropriate to attach a transponder such as an RFID tag to the diaper itself, because infants may remove, destroy, or even eat these tags. Therefore, it may be appropriate to attach e.g. an RFID tag to the packaging of the diaper. In this manner, the packaging may be discarded into the same device as the diaper. The event of discarding may then be detected by detecting that the RFID tag attached to the packaging is moved into the storage volume of the device.

In a further embodiment, at least one used product is a waste product from a hospital-related setting, in particular one of the group consisting of cannula, spatula, syringe, swab, band-aid, bandage, and medicine, and/or a packaging thereof. This may also provide the advantage that the arrangement may be used in a very flexible manner.

Especially waste products from a hospital-related setting may be products for which a reliable and continuous support is absolutely mandatory. The same holds true for products for nursing homes, retirement homes, or shared apartments for elderly people. In the latter cases, the habitants of these houses or apartments may show discrepancies in managing drugstore products due to age-related symptoms. Therefore, the use of the management arrangement may be crucial in order to guarantee the continuance of the presence of a hygienic scenario.

In a further embodiment, at least one used product is a waste product from a bath-related setting, in particular one of the group consisting of hair coloring agent, nail polish, powder, toilet tissue, dietary supplement, and fragrance, and/or a packaging thereof. This may also provide the advantage that the arrangement may be used in a very flexible manner.

Especially waste products from a bath-related setting are products for which a reliable and continuous support is mandatory. Such drugstore products are generally applied in the early morning hours, when there is no option to buy these products in a store. A plurality of people may even consider it as an undue burden to leave their home in the morning before having applied a variety of bath-related products. In this case, it may be impossible for these people to visit a store, even if the store would be already open. Therefore, the use of the management arrangement may be crucial in order to guarantee the continuance of the presence of a hygienic scenario.

In a further embodiment, at least a part of the waste product comprises a transponder configured for wirelessly communicating data, in particular by one of the group consisting of Near Field Communication and Radio Frequency Identification. This may also provide the advantage that the arrangement may be used in a very flexible manner.

The product may for example be a garbage bag, a diaper, or a garbage bag containing diapers. Hereby, the garbage bag may comprise a transponder and/or each waste product and/or a packaging of each waste product may comprise a transponder. In this manner, a conventional garbage bag may be applied to store a plurality of waste products, wherein each waste product and/or the packaging thereof comprises its own transponder. In the case that only a few waste products within a garbage bag comprise a transponder, the event of detecting the plurality of transponders at once may be counted as only one event of a garbage bag being moved into the storage volume.

In a further embodiment, the second data communication unit is configured for triggering a supply of at least one unused product as a response to the receipt of the transmitted information. This may provide the advantage that e.g. used hygiene products are replaced by unused hygiene products in a fast and efficient manner based on an automatic manner. In other words, the content of the reservoir of unused hygiene products associated with a user is regulated. When such a supply is triggered, one or more hygiene products may be physically shipped to the user. Such information of shipped hygiene products may be stored at any of the data communication units and may be communicated between the data communication units. Furthermore, such information may be used for the determination of a subsequent shipping, when a sufficient number of shipped hygiene products has again been used and moved into the storage volume.

The second communication unit may be part of and/or coupled to a remote data communication unit. The remote data communication unit may be situated in the sphere of influence of a supplier of unused hygiene products. The supplier of unused hygiene products may, upon receiving information from the second data communication unit, trigger a delivery process of unused hygiene products. For example, a packet of unused hygiene products will be send by mail or a packet of unused hygiene products will be directly delivered to the user. The supplier may be a store, a supermarket, a drug store, or a local service provider.

In a further embodiment, the second data communication unit forms part of a mobile device. This may provide the advantage that technology, which is permanently used in daily life, is integrated into the management of hygiene products. Thereby the process is made more flexible, more efficient and more easy to use.

The mobile device may be for example a smart phone, a tablet, or a laptop. The first data communication unit may transmit information to the mobile device in the first place. For example, the number of hygiene products in the storage volume may exceed a predetermined threshold value, while a user, such as a member of the household, is localized outside if the household and close to a store. Then, the user would know right away that unused hygiene product are needed and may directly customize unused hygiene products. In the same manner, the user may consult her or his mobile device in order to find out, if unused hygiene products at his or her household are needed. This is especially useful, when she or he is already in a store.

The mobile device may also be an NFC- or RF-mobile device. In this manner, the second data communication unit of the mobile device may communicate with the first data communication unit and/or the wireless communication interface via an NFC connection and/or an RF connection. For example, a user may only bring her or his mobile device into sufficient spatial vicinity to the first data communication unit and/or the wireless communication interface in order to obtain information concerning the amount and/or type of hygiene products in the storage volume.

Furthermore, the mobile device may be configured to be communicatively coupled with a remote data communication unit, which may be in the sphere of influence of a supplier of unused hygiene products. In this manner, a supply of unused hygiene products may be triggered.

In a further embodiment, the first data communication unit and the second data communication unit are configured to be communicatively coupled in order to communicate with each other, in particular via the internet. This may provide the advantage that a fast, efficient and flexible communication with established standards over a wide distance is enabled.

In a further embodiment, detecting is done by using a mobile device, in particular an NFC-enabled mobile device. This may provide the advantage that in a fast, efficient and flexible manner, a user may detect the content of the device and/or of a garbage bag. The user may simply bring the NFC-enabled mobile device into sufficient spatial vicinity to the device in order to receive data related to the content of the device. Furthermore, when a garbage bag may have already been removed from the device, the user may still be able to detect the content of the garbage bag.

In a further embodiment, detecting is performed by at least one detector element which is arranged along a disposal route, in particular a disposal route between the storage volume and a waste container. This may provide the advantage that the described method is very flexible and detection very accurate and reliable.
For example, the detector element may be arranged at an entrance to a house or an apartment. In this example, an event may be detected when the storage volume, e.g. a garbage can and/or a garbage bag which includes at least one drugstore product, in particular a hygiene product, is moved out of the house or apartment and towards a waste container. In another example, the detector may be arranged at the waste container and an event may be detected when e.g. a garbage can and/or a garbage bag which includes at least one drugstore product, in particular a hygiene product, is placed into the waste container. There may also be a plurality of detector elements and/or a plurality of detector element devices arranged along the disposal route.

In a further embodiment, the method comprises displaying a shopping list of at least one unused product to a user in order to enable a manual triggering of a supply of at least one unused product by the user. This may provide the advantage that in a fast, efficient and flexible manner, a user may control the list of unused products before ordering them. There may be scenarios in which the user may for example change the brand of a specific product or reduce the amount of unused products in order to save costs. It may be considered as appropriate to enable a manual control in such scenarios.

In a further embodiment, the method comprises comparing the information with predetermined information concerning a remaining amount of unused product parts associated to a predefined user. This may provide the advantage that it may be known at any time point, when the number of e.g. unused hygiene products within a reservoir associated with the user decreases to a critical point. Furthermore, at any time point the amount of hygiene products within the reservoir of the user is known, without any need for the user for being in proximity to the reservoir.

The aspects defined above and further aspects of the invention are apparent from the examples of embodiment to be described hereinafter and are explained with reference to these examples of embodiment.

The invention will be described in more detail hereinafter with reference to examples of embodiment but to which the invention is not limited.
Figure 1 illustrates an arrangement for managing hygiene products according to an exemplary embodiment of the invention.
Figure 2 illustrates an arrangement for managing hygiene products according to another exemplary embodiment of the invention, wherein the second communication unit forms part of a mobile device.
Figure 3 illustrates an arrangement for managing hygiene products according to another exemplary embodiment of the invention, wherein an NFC-mobile device is at least temporarily brought into sufficient spatial vicinity to the detector element.
Figure 4 illustrates an arrangement for managing hygiene products according to another exemplary embodiment of the invention, wherein the detector element comprises a photo sensor.
Figure 5 illustrates an arrangement for managing hygiene products according to another exemplary embodiment of the invention, wherein the detector element comprises a weighting device.
Figure 6 illustrates an arrangement for managing hygiene products according to another exemplary embodiment of the invention, wherein the detector element communicates with a plurality of waste products.

The illustrations in the drawings are schematically. In different drawings, similar or identical elements are provided with the same reference signs.

Before exemplary embodiments will be described with reference to the figures, some basic considerations will be summarized based on which exemplary embodiments of the invention have been developed.

According to an exemplary embodiment, an arrangement to manage hygiene products using NFC tags with both windows® (or any other operating system, such as IOS®, Apple®, Unix®, Android®, Blackberry®) and mobile app interface is provided. Also an architecture on how to implement NFC Technology into hygiene products is provided.

Many different kinds of NFC tags may be implemented according to exemplary embodiments. It is possible to use research tags, a disposable NFC tag (having only an NFC chip), or a box tag. NFC tags usable for exemplary embodiment of the invention may have different types of NFC chips, for instance 1K chip, NTAG 203 chip, Ultralight, Ultralight C, NTAG203, Mifare 1k, Desfire 4k, Topaz 512, NTAG 210, NTAG 213, etc. Different shapes of such NFC tags are possible, such as an NFC sticker, an NFC card, etc.

With the wide availability of smart phones and internet connectivity nowadays and the emergence of new technologies like the RFID and NFC that is being implemented in everyday tasks, the processes and related designed hardware according to exemplary embodiments of the invention will describe how the use of such technologies in a hygiene related setting can increase the efficiency of daily work a lot.

In the following, exemplary embodiments are described, which use hygiene products. It should be noticed that the invention is not limited to hygiene products, but that hygiene products are just an example of products, in particular drugstore products, wherein the term product denotes a product article as well as its packaging.

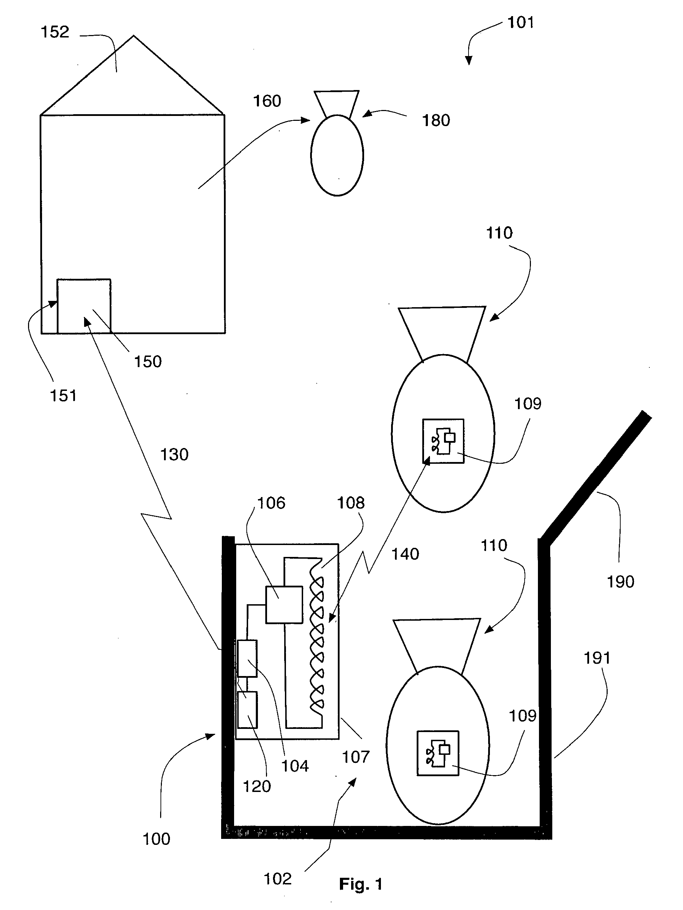

**Figure 1** illustrates an arrangement 101 for managing hygiene products 110 according to an exemplary embodiment of the invention. The arrangement 101 comprises a device 100 and at least one (for something already used) hygiene product 110. The device 100 comprises a storage volume 102 for storing used hygiene products 110. Furthermore, the device 100 comprises a detector element 107 configured for detecting an event that the used hygiene product 110 is moved into the storage volume 102 by detecting that the used hygiene product 110 is brought at least temporarily in sufficient spatial vicinity to the detector element 107 during the moving. Furthermore, the device 100 comprises a data storage 104 configured for storing information concerning the used hygiene product 110 and at least one associated detected event. Furthermore, the device 100 comprises a first data communication unit 120 configured for transmitting the information to a second data communication unit 150.

The used hygiene product 110 is configured for being detected by the detector element 107 of the device 100, when the at least one used hygiene product 110 is moved in the storage volume 102. The detector element 107 comprises a wireless data communication interface 108 configured for wirelessly communicating data 140 by Near Field Communication and/or Radio Frequency Identification, wherein the sufficient spatial vicinity between the used hygiene product 110 and the wireless data communication interface 108 is less than 10 cm. The device 100 further comprises a processor 106 configured for supervising the information concerning the at least one used hygiene product 110. The processor 106 is configured for supervising a number and/or a type of the at least one used hygiene product 110, which is moved into the storage volume 102. The first data communication unit 120 is configured for transmitting data based on the information to a second data communication unit 150, when a number of used hygiene products 110, which have been moved into the storage volume 102, exceeds a predetermined threshold value.

Hereby, the first data communication unit 120 and the second data communication unit 150 are configured to communicatively couple, in particular via the internet 130. The second data communication unit 150 is configured for triggering a supply 160 of at least one unused hygiene product 180 as a response to the receipt of the transmitted information concerning the at least one used hygiene product 100.

In an exemplary embodiment described herein, the device 100 is a garbage can consisting of a sidewall 191 and a lid 190. The sidewall 191 defines the storage volume 102 within. The used hygiene product 110 is a garbage bag filled with diapers (or is alternatively a single used diaper) and comprises a further wireless data communication interface 109 attached to the hygiene product 110. When the hygiene product 110 is moved into the storage volume 102, the further wireless data communication interface 109 of the used hygiene product 110 is brought at least temporarily in sufficient spatial vicinity to the wireless data communication interface 108 of the detector element 107 during the moving. Then, the wireless data communication interface 108 detects the presence of the used hygiene product 110 by NFC and/or RFID. This detection event 140 is computed by the processor 106 and stored in the data storage 104. The processor 106 counts the number of detection events 140, i.e. when a used hygiene product 110 is moved into the storage volume 102. When the number of used hygiene products 110, which have been moved into the storage volume 102, exceeds a predetermined threshold values of, for example ten used hygiene products, then the processor 106 causes the first data communication unit 120 to transmit information concerning the used hygiene products 110 via the internet 130 to the second data communication unit 150. The second data communication unit 150 forms part of a remote data communication unit 151 in the sphere of influence of a supplier of unused hygiene products 152. Upon receiving the information concerning used hygiene products 110, the supplier of unused hygiene products 152 will trigger a delivery 160 of new or unused hygiene products 180 to the household of the user, where the device 100 and also a reservoir of unused hygiene products associated with the user is localized. In this manner, in an automatic, reliable, as well as cost- and time-saving manner, hygiene products 110 are managed in order to avoid that a user runs out of unused hygiene products 180 in a hygiene related setting.

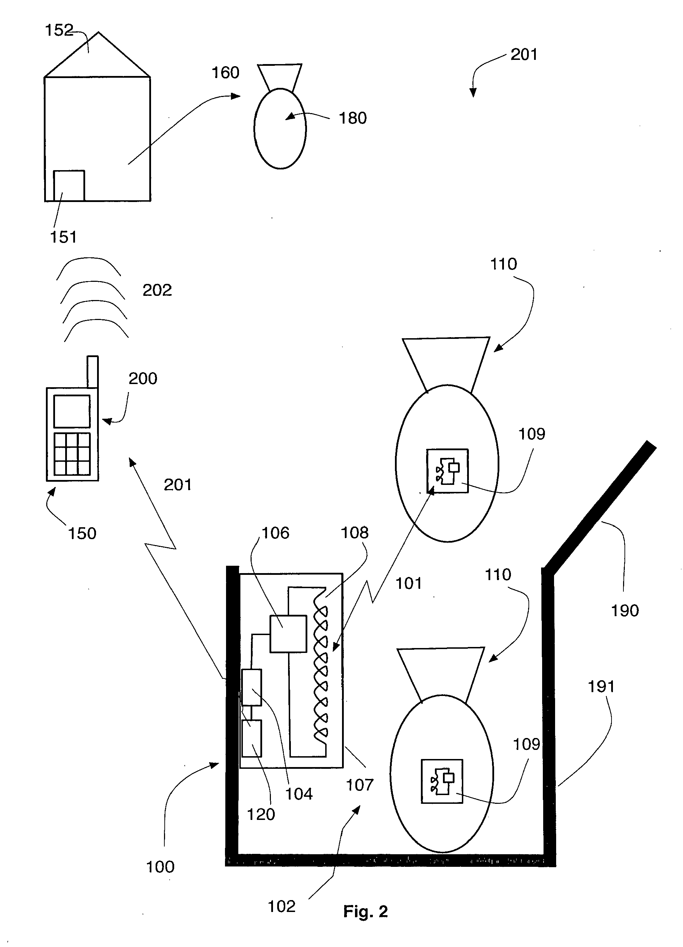

**Figure 2** illustrates an arrangement 201 for managing hygiene products 110 according to another exemplary embodiment of the invention, wherein the second communication unit 150 forms part of a mobile device 200. The first data communication unit 120 transmits further information concerning the used hygiene products 110 to the mobile device 200, e.g. via the internet. The mobile device 200 then transmits data 202 to a remote data communication unit 151 belonging to the remote supplier of unused hygiene products 152. Upon receiving the data transmission 202, the supplier of unused hygiene products 152 will trigger a delivery 160 of unused hygiene products 180 to the household associated with the user, where the device 100 is localized.

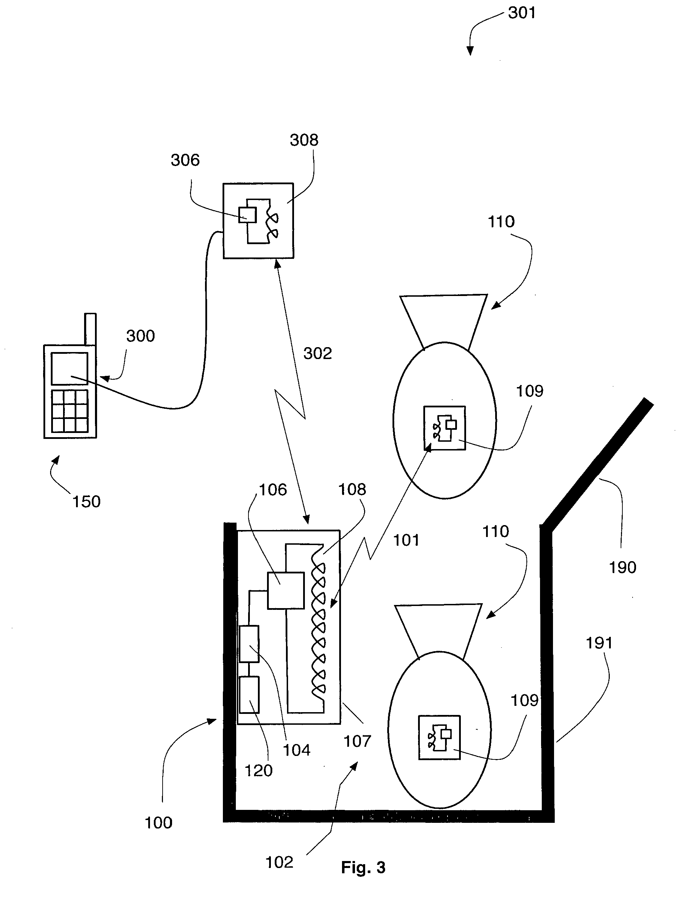

**Figure 3** illustrates an arrangement 301 for managing hygiene products 110 according to another exemplary embodiment of the invention, wherein information is transmitted to a mobile device 300, which is at least temporarily in sufficient spatial vicinity to the detector element 107. Hereby, the mobile device 300 is an NFC-mobile device 300. When the NFC-mobile device 300 and the detector element 107 of the device 100 are in sufficient spatial vicinity, an NFC connection 302 is established between the NFC-mobile device 300 and the wireless data communication interface 108. In this manner, information concerning the used hygiene products 110 can be transmitted via NFC to the NFC-mobile device 300. The NFC-mobile device 300 can then transmit data to a remote data communication unit 151 as has been shown in Figure 2. It should be noted that the NFC-mobile device 300 can as well establish an NFC-communication to the first data communication unit 120 in an exemplary embodiment.

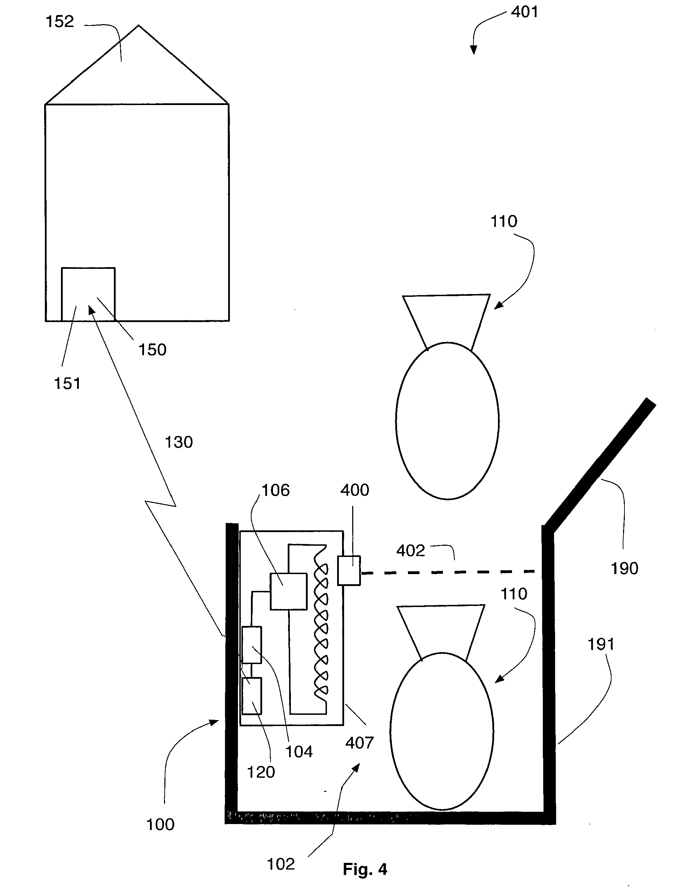

**Figure 4** illustrates an arrangement 401 for managing hygiene products 110 according to another exemplary embodiment of the invention, wherein the detector element 407 comprises a photo sensor 400. The photo sensor 400 is realized as a diffusive arrangement, wherein a beam of light 402 is emitted by a transmitter of the photo sensor 400. When a used hygiene product 110 is moved into the storage volume 102, then the used hygiene product 110 passes through the beam of light 402. Thus, the used hygiene product 110 is brought into sufficient spatial vicinity to the detector element 407. As a result, for a short period of time, the beam of light 402 will be interrupted and will be at least partially reflected. This reflection event is detected by a receiver of the photo sensor 400 and will be computed by the processor 106.

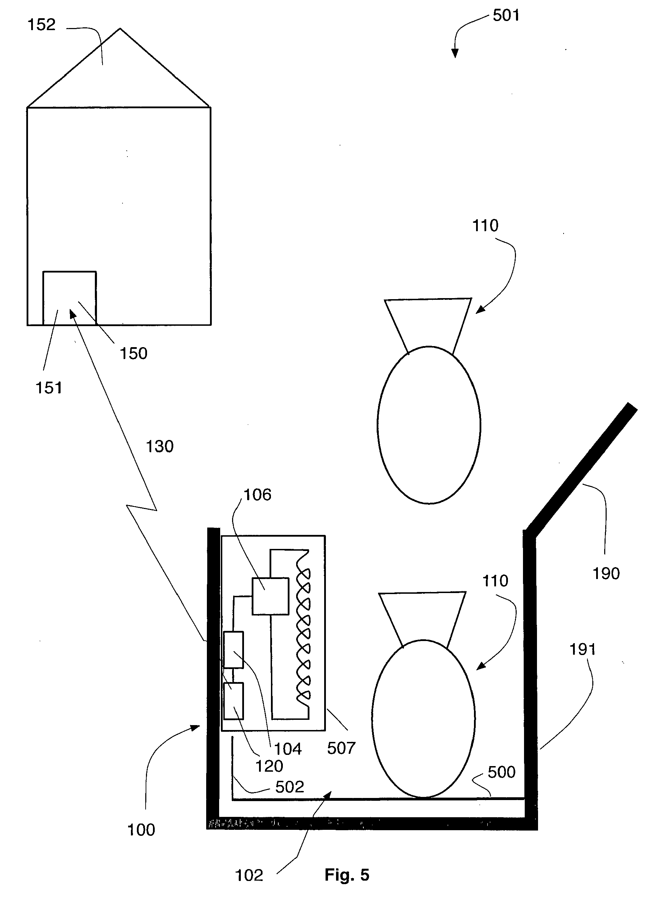

**Figure 5** illustrates an arrangement 501 for managing hygiene products 110 according to another exemplary embodiment of the invention, wherein the detector element 507 comprises a weighting device 500. The detector element 507 comprises further a balance 500. The balance 500 is arranged at the bottom of the device 100 and covers a majority of the bottom surface of the device 100. When a used hygiene product 110 is moved into the storage volume 102, then the used hygiene product 110 is brought into sufficient spatial vicinity to the detector element 507 and influences with its mass the balance 500. Thus, the weight measured by the balance 500 is changed by moving the used hygiene product 110 into the storage volume 102. This event, that the weight has changed, is measured by the balance 500. The balance 500 is further electrically connected 502 to the processor 106 of the detector element 507, which processor 106 then computes the detected information.

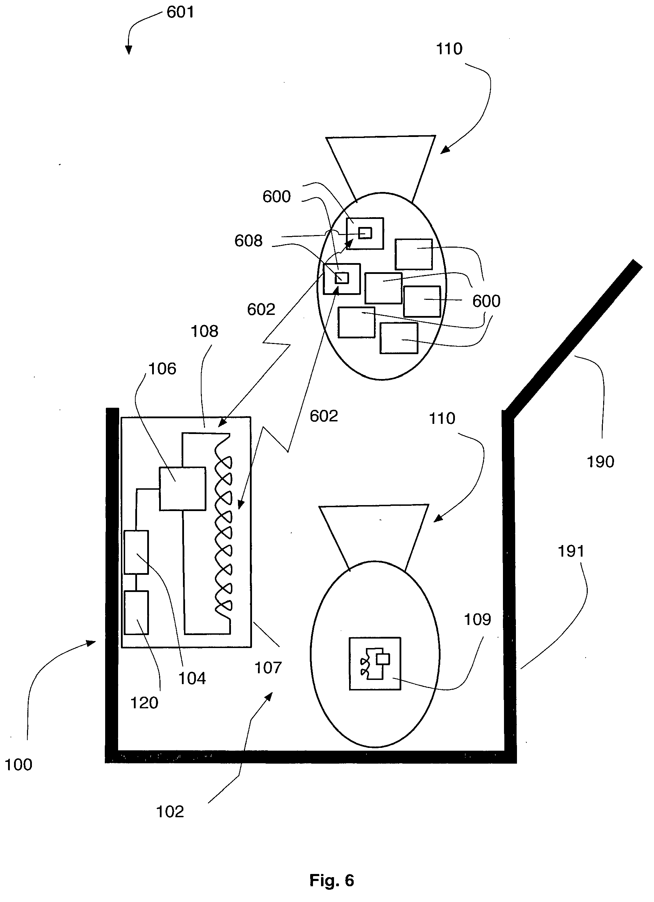

**Figure 6** illustrates an arrangement 601 for managing hygiene products 110 according to another exemplary embodiment of the invention, wherein the wireless data communication interface 108 of the detector element 107 communicates with a plurality of waste products 600. In an exemplary embodiment, the used hygiene product 110 is a garbage bag, which contains a plurality of waste products 600, in particular diapers. Hereby, each waste product 600 comprises a transponder 608. When the transponders 608 of the plurality of waste products 600 are brought into sufficient spatial vicinity to the wireless data communication interface 108, then information concerning the waste products 600 and/or the used hygiene product 110 is wirelessly communicated via NFC or RFID to the data communication interface 108 of the detector element 107.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

Implementation of the invention is not limited to the preferred embodiments shown in the figures and described above. Instead, a multiplicity of variants are possible which use the solutions shown and the principle according to the invention even in the case of fundamentally different embodiments.

### Reference signs

- 100: Device
- 101, 201, 301, 401, 501, 601: Arrangement
- 102: Storage volume
- 104: Data storage
- 106: Processor
- 107: Detector element
- 108: Wireless data communication interface
- 109: Further wireless data communication interface
- 110: Used hygiene product
- 120: First data communication unit
- 130: Internet
- 140: Information concerning used hygiene products
- 150: Second data communication unit
- 151: Remote data communication unit
- 152: Supplier of unused hygiene products
- 160: Delivery process
- 180: Unused hygiene product
- 190: Lid
- 191: Side wall
- 200: Mobile device
- 201: Further information concerning used hygiene products
- 202: Data transmission
- 300: NFC-mobile device
- 302: NFC-connection
- 306: Other processor
- 308: Other wireless data communication interface
- 400: Photo sensor
- 402: Beam of light
- 407: Detector element with photo sensor
- 500: Balance
- 502: Electric connection
- 507: Detector element with balance
- 600: Waste product
- 602: Information concerning waste products
- 608: Transponder

## Claims

1. A device (100) for managing products (110), in particular drugstore products, more particularly hygiene products, wherein the device (100) comprises:
a storage volume (102) for storing at least one used product part (110);
a detector element (107) configured for detecting an event that the at least one used product part (110) is moved into the storage volume (102) by detecting that the at least one used product part (110) is brought at least temporarily in sufficient spatial vicinity to the detector element (107) during the moving;
a first data communication unit (120) configured for transmitting data based on information concerning the at least one used product part (110) and at least one associated detected event to a second data communication unit (150).

2. The device (100) according to claim 1, comprising at least one of the following features:
further comprising a data storage (104) configured for storing the information concerning the at least one used product part (110) and at least one associated detected event;
wherein the detector element (107) comprises a wireless data communication interface (108) configured for wirelessly communicating data with a further wireless data communication interface (109) arranged at the at least one used product part (110), in particular by one of the group consisting of Near Field Communication and Radio Frequency Identification;
wherein the sufficient spatial vicinity between the at least one used product part (110) and the detector element (107) corresponds to a mutual distance of less than 120 cm, in particular less than 10 cm, more particularly less than 5 cm;
wherein the detector element (107) comprises a photo sensor (400);
wherein the detector element (107) comprises a weighting device (500).

3. The device (100) according to any one of the preceding claims, comprising a processor (106) configured for supervising the information.

4. The device (100) according to claim 3, comprising at least one of the following features:
wherein the processor (106) is configured for supervising a number and/or a type of the at least one used product part (110);
wherein the processor (106) is configured for triggering the first data communication unit (120) for transmitting the data based on the information, when a number of used product parts (110), which have been moved in the storage volume (102), exceeds a predetermined threshold value;
wherein the processor (106) is configured for triggering the first data communication unit (120) for transmitting the data based on the information, when a number of remaining unused products or product parts (110) associated to a predefined user falls below a predetermined threshold value.

5. An arrangement (101) for managing products (110), in particular drugstore products, more particularly hygiene products, wherein the arrangement (101) comprises
a device (100) according to any one of the claims 1 to 4;
at least one used product part (110) configured for being detected by the detector element (107) of the device (100), when the at least one used product part (110) is moved in the storage volume (102).

6. The arrangement (101) according to claim 5, comprising at least one of the following features:
comprising the second data communication unit (150) configured for receiving the data based on the information from the first data communication unit (120);
wherein the at least one used product part (110) comprises a further wireless data communication interface configured for wirelessly communicating data to the detector element (107), in particular by one of the group consisting of Near Field Communication and Radio Frequency Identification.

7. The arrangement (101) according to any one of the claims 5 to 6, comprising one of the following features:
wherein the at least one used product part (110) is a waste product part (600), in particular a used product and/or a packaging of the product (110);
wherein at least one used product part (110) is a waste product part (600) from a hospital-related setting, in particular one of the group consisting of cannula, spatula, syringe, swab, band-aid, bandage, and medicine, and/or a packaging thereof;
wherein at least one used product part (110) is a waste product (600) from a bath-related setting, in particular one of the group consisting of hair coloring agent, nail polish, powder, dietary supplement, and fragrance, and/or a packaging thereof.

8. The arrangement (101) according to claim 7, comprising at least one of the following features:
wherein at least a part of the waste product part (600) comprises a transponder (608) configured for wirelessly communicating data, in particular by one of the group consisting of Near Field Communication and Radio Frequency Identification;
wherein a sufficient spatial vicinity between the at least one waste product part (600) and the detector element (107) is less than 120 cm, in particular less than 10 cm, more particularly less than 5 cm.

9. The arrangement (101) according to any one of the claims 6 to 8, comprising at least one of the following features:
wherein the second data communication unit (150) is configured for triggering a supply of at least one unused product (180) as a response to the receipt of the transmitted data;
wherein the second data communication unit (150) forms part of a mobile device (200);
wherein the first data communication unit (120) and the second data communication unit (150) are configured to be communicatively coupled in order to communicate with each other, in particular via the internet.

10. A method of managing products (110), in particular drugstore products, more particularly hygiene products, wherein the method comprises:
detecting an event that at least one used product part (110) is moved in a storage volume (102);
storing and/or processing information concerning the at least one used product part (110) and at least one associated detected event; and
generating data based on the information.

11. The method according to claim 10, comprising at least one of the following features:
further comprising transmitting the data based on the information to a data communication unit (150);
further comprising transmitting the data based on the information to a display;
wherein detecting is performed by wirelessly communicating data between a wireless data communication interface (108) arranged at the storage volume (102) and a further wireless data communication interface (109) arranged at the used product part (110), in particular by one of the group consisting of Near Field Communication and Radio Frequency Identification;
wherein detecting is triggered by an at least temporarily sufficient spatial vicinity between the at least one used product part (110) and a detector element (107) arranged at the storage volume (102), in particular less than 120, more particularly less than 10 cm, even more particularly less than 5 cm;
wherein detecting is performed by using a mobile device, in particular an NFC-enabled mobile device;
wherein detecting is performed by at least one detector element (107) which is arranged along a disposal route, in particular a disposal route between the storage volume and a waste container;
wherein transmitting the data based on the information is performed via a wireless communication network, in particular the internet;
further comprising triggering a supply of at least one unused product part (180) to a predefined user in response to the receipt of the transmitted data concerning the at least one used product part (110) at a remote data communication unit (151);
further comprising displaying a shopping list of at least one unused product (180) to a user in order to enable a manual triggering of a supply of at least one unused product (180) by the user;
further comprising comparing the data or information with predetermined data or information concerning a remaining amount of unused product parts (110) associated to a predefined user.

12. A computer-readable medium, in which a computer program of managing products (110), in particular drugstore products, more particularly hygiene products, is stored, which computer program, when being executed by one or a plurality of processors (106), is adapted to carry out or control a method according to any of claims 10 to 11.

13. A program element of managing products (110), in particular drugstore products, more particularly hygiene products, which program element, when being executed by one or a plurality of processors (106), is adapted to carry out or control a method according to any of claims 10 to 11.

## Amended claims

### Amended claims in accordance with Rule 137(2) EPC.

1. A device (100) for managing products (110), in particular drugstore products, more particularly hygiene products, wherein the device (100) comprises:
a storage volume (102) for storing at least one used product part (110);
a detector element (107) configured for detecting an event that the at least one used product part (110) is moved into the storage volume (102) by detecting that the at least one used product part (110) is brought at least temporarily in sufficient spatial vicinity to the detector element (107) during the moving;
a first data communication unit (120) configured for transmitting data based on information concerning the at least one used product part (110) and at least one associated detected event to a second data communication unit (150); and
a processor (106) configured for supervising the information,
wherein the processor (106) is configured for triggering the first data communication unit (120) for transmitting the data based on the information, when a number of remaining unused products or product parts (110) associated to a predefined user falls below a predetermined threshold value.

2. The device (100) according to claim 1, comprising at least one of the following features:
further comprising a data storage (104) configured for storing the information concerning the at least one used product part (110) and at least one associated detected event;
wherein the detector element (107) comprises a wireless data communication interface (108) configured for wirelessly communicating data with a further wireless data communication interface (109) arranged at the at least one used product part (110), in particular by one of the group consisting of Near Field Communication and Radio Frequency Identification;
wherein the sufficient spatial vicinity between the at least one used product part (110) and the detector element (107) corresponds to a mutual distance of less than 120 cm, in particular less than 10 cm, more particularly less than 5 cm;
wherein the detector element (107) comprises a photo sensor (400); wherein the detector element (107) comprises a weighting device (500).

3. The device (100) according to claim 1 or 2, comprising at least one of the following features:
wherein the processor (106) is configured for supervising a number and/or a type of the at least one used product part (110);
wherein the processor (106) is configured for triggering the first data communication unit (120) for transmitting the data based on the information, when a number of used product parts (110), which have been moved in the storage volume (102), exceeds a predetermined threshold value.

4. An arrangement (101) for managing products (110), in particular drugstore products, more particularly hygiene products, wherein the arrangement (101) comprises
a device (100) according to any one of the claims 1 to 3;
at least one used product part (110) configured for being detected by the detector element (107) of the device (100), when the at least one used product part (110) is moved in the storage volume (102).

5. The arrangement (101) according to claim 4, comprising at least one of the following features:
comprising the second data communication unit (150) configured for receiving the data based on the information from the first data communication unit (120);
wherein the at least one used product part (110) comprises a further wireless data communication interface configured for wirelessly communicating data to the detector element (107), in particular by one of the group consisting of Near Field Communication and Radio Frequency Identification.

6. The arrangement (101) according to any one of the claims 4 or 5, comprising one of the following features:
wherein the at least one used product part (110) is a waste product part (600), in particular a used product and/or a packaging of the product (110);
wherein at least one used product part (110) is a waste product part (600) from a hospital-related setting, in particular one of the group consisting of cannula, spatula, syringe, swab, band-aid, bandage, and medicine, and/or a packaging thereof;
wherein at least one used product part (110) is a waste product (600) from a bath-related setting, in particular one of the group consisting of hair coloring agent, nail polish, powder, dietary supplement, and fragrance, and/or a packaging thereof.

7. The arrangement (101) according to claim 6, comprising at least one of the following features:
wherein at least a part of the waste product part (600) comprises a transponder (608) configured for wirelessly communicating data, in particular by one of the group consisting of Near Field Communication and Radio Frequency Identification;
wherein a sufficient spatial vicinity between the at least one waste product part (600) and the detector element (107) is less than 120 cm, in particular less than 10 cm, more particularly less than 5 cm.

8. The arrangement (101) according to any one of the claims 5 to 7, comprising at least one of the following features:
wherein the second data communication unit (150) is configured for triggering a supply of at least one unused product (180) as a response to the receipt of the transmitted data;
wherein the second data communication unit (150) forms part of a mobile device (200);
wherein the first data communication unit (120) and the second data communication unit (150) are configured to be communicatively coupled in order to communicate with each other, in particular via the internet.

9. A method of managing products (110), in particular drugstore products, more particularly hygiene products, wherein the method comprises:
detecting an event that at least one used product part (110) is moved in a storage volume (102);
storing and/or processing information concerning the at least one used product part (110) and at least one associated detected event; and
generating data based on the information;
supervising the information by a processor (106); and
triggering by the processor (106) a first data communication unit (120) for transmitting the data based on the information, when a number of remaining unused products or product parts (110) associated to a predefined user falls below a predetermined threshold value.

10. The method according to claim 9, comprising at least one of the following features:
further comprising transmitting the data based on the information to a data communication unit (150);
further comprising transmitting the data based on the information to a display;
wherein detecting is performed by wirelessly communicating data between a wireless data communication interface (108) arranged at the storage volume (102) and a further wireless data communication interface (109) arranged at the used product part (110), in particular by one of the group consisting of Near Field Communication and Radio Frequency Identification;
wherein detecting is triggered by an at least temporarily sufficient spatial vicinity between the at least one used product part (110) and a detector element (107) arranged at the storage volume (102), in particular less than 120, more particularly less than 10 cm, even more particularly less than 5 cm;
wherein detecting is performed by using a mobile device, in particular an NFC-enabled mobile device;
wherein detecting is performed by at least one detector element (107) which is arranged along a disposal route, in particular a disposal route between the storage volume and a waste container;
wherein transmitting the data based on the information is performed via a wireless communication network, in particular the internet;
further comprising triggering a supply of at least one unused product part (180) to a predefined user in response to the receipt of the transmitted data concerning the at least one used product part (110) at a remote data communication unit (151);
further comprising displaying a shopping list of at least one unused product (180) to a user in order to enable a manual triggering of a supply of at least one unused product (180) by the user;
further comprising comparing the data or information with predetermined data or information concerning a remaining amount of unused product parts (110) associated to a predefined user.

11. A computer-readable medium, in which a computer program of managing products (110), in particular drugstore products, more particularly hygiene products, is stored, which computer program, when being executed by one or a plurality of processors (106), is adapted to carry out or control a method according to any of claims 9 to 10.

12. A program element of managing products (110), in particular drugstore products, more particularly hygiene products, which program element, when being executed by one or a plurality of processors (106), is adapted to carry out or control a method according to any of claims 9 to 10.
